# EUROPÄISCHE PATENTSCHRIFT

(11) **EP 0 508 132 B1**
(45) Veröffentlichungstag und Bekanntmachung des Hinweises auf die Patenterteilung: **18.01.1995**
(21) Anmeldenummer: 92104154.7
(22) Anmeldetag: 11.03.1992
(51) Int. Cl.: B23P 15/00, F16K 27/04

(54) **Kolbenschieberventil**
Piston slide valve
Distributeur à tiroir

(30) Priorität: 14.03.1991 DE 4108272
(43) Veröffentlichungstag der Anmeldung: 14.10.1992
(73) Patentinhaber: HYDRAULIK-RING GMBH, D-72622 Nürtingen (DE)
(72) Erfinder:
(74) Vertreter: Kohl, Karl-Heinz

(56) Entgegenhaltungen:
- EP-A- 0 368 148
- FR-A- 2 382 973
- GB-A- 1 427 705
- SOVIET INVENTIONS ILLUSTRATED Section PQ, Week 8534, 3. Oktober 1985 DerwentPublications Ltd., London, GB; Class P54, AN 85-208478/34 & SU-A-1136 901 (ZHODZISHSKII)
- PATENT ABSTRACTS OF JAPAN vol. 11, no. 380 (M-650)(2827) 11. Dezember 1987 & JP-A-62 152 621 (COPAL CO LTD) 7 Juli 1987

## Beschreibung

Die Erfindung betrifft ein Kolbenventil nach dem Oberbegriff des Anspruches 1 sowie ein Verfahren zur Herstellung eines solchen Kolbenventils nach dem Oberbegriff des Anspruches 6.

Bei bekannten Kolbenschieberventilen werden die Kolben durch Drehen hergestellt, wobei die Steuerkanten angefräst, gehärtet, geschliffen und evtl. durch Finishen und Läppen bearbeitet werden. Die Bohrung zur Aufnahme der Kolben wird durch Bohren, Reiben und Honen hergestellt. Nachteilig ist hierbei, daß besonders bei kleinen Kolben, die bsp. einen Durchmesser von 2 mm haben, nur eine relativ geringe Genauigkeit des Kolbenlaufspiels erreicht werden kann. Solche Kolben haben bei hohen Systemdrücken ungenügende Leckagewerte. Durch relativ große Fertigungstoleranzen bei der Herstellung der Kolben und der Aufnahmebohrung für die Kolben können im Extremfall große Laufspiele im eingebauten Zustand auftreten. Dadurch können hohe Leckagen auftreten, die bei Steuerung von kleinen Ölströmen sehr störend sind.

Es ist auch bekannt (GB-A-1 427 705), eine Kolben-Zylinder-Anordnung durch zwei gegeneinander bewegbare Hohlkolbenteile zu bilden, in denen jeweils radial sie durchsetzende Bohrungen sowie axial verlaufende Nuten für das Hydrauliköl vorhanden sind. Die Bohrungen und Nuten können durch Funkenerosion hergestellt werden.

Der Erfindung liegt die Aufgabe zugrunde, das gattungsgemäße Kolbenventil und das gattungsgemäße Verfahren so auszubilden, daß auch kleine Bauarten, die bei hohen Drücken arbeiten, nur eine sehr geringe Leckage aufweisen und kostengünstig hergestellt werden können.

Diese Aufgabe wird beim gattungsgemäßen Kolbenventil erfindungsgemäß mit den kennzeichnenden Merkmalen des Anspruches 1 und beim gattungegemäßen Verfahren erfindungsgemäß mit den kennzeichnenden Merkmalen des Anspruches 6 gelöst.

Infolge der erfindungsgemäßen Ausbildung kann das Ventil äußerst kostengünstig hergestellt werden, da die Kolben in Serie gefertigt werden können. Da die umlaufende Ölnut am Nutgrund das Mehrkantprofil aufweist, kann diese Ölnut durch Drahterodieren sehr einfach und preisgünstig hergestellt werden. Durch das Drahterodieren entfallen die mechanischen Arbeitsgänge, wie Härten, Schleifen, Läppen, sowie die Bearbeitungsgänge Drehen zur Herstellung der umlaufenden Ölnuten und Fräsen zur Herstellung der Feinsteuerkanten. Dadurch können nahezu alle Formen von Ölnuten und Feinsteuerkanten in engsten Toleranzen hergestellt werden. Verwendet man insbesondere zur Herstellung der Kolben eine Lagernadel, die in µm Toleranzen geliefert werden kann, dann können erhebliche Kosten eingespart werden, da die Lagernadeln Pfennigartikel sind. Die Kolben können in großen Serien hergestellt werden, da nur geringe Materialabtragungen durch Drahterodieren vorgesehen sind. Entsprechend kann die Bohrung zur Aufnahme der Kolben einfach und kostengünstig hergestellt werden. Bei der Herstellung der Bohrung kann eine sehr hohe Zylindrizität erreicht werden. Aufweitungen an Steuerkanten, die eine hohe Leckage mit sich führen können, werden einwandfrei vermieden. Vorteilhaft lassen sich so Kolben mit sehr kleinen Abmessungen, bsp. mit einem Kolbendurchmesser von 2 mm und einer Länge von 13 mm, mit geringsten Toleranzen herstellen. Die Kolben haben darum nur sehr geringe Leckageverluste und können daher auch bei hohen drücken, bsp. bis zu 190 bar, eingesetzt werden. Hierbei wird die Leckage bei einer sehr niedrigen Viskosität von maximal 5 cm³/min auf ein Minimum reduziert. Auch störende Grate, die durch eine mechanische Bearbeitung entstehen können, werden durch Erodieren entfernt und nicht, wie bsp. beim Honen, weggedrückt. Dadurch können hohe Leckagen, die bei der Steuerung von kleinen Ölströmen sehr störend sind, sicher verhindert und das Ventil mit sehr geringen Kosten einfach hergestellt werden.

Weitere Merkmale der Erfindung ergeben sich aus den weiteren Ansprüchen, der Beschreibung und den Zeichnungen.

Die Erfindung wird nachstehend anhand eines in den Zeichnungen dargestellten Ausführungsbeispieles näher beschrieben.

Es zeigt:
- Figur 1: ein erfindungsgemäßes Kolbenschieberventil im Axialschnitt,
- Figur 2: einen Kolben des erfindungsgemäßen Kolbenschieberventils nach Figur 1 in vergrößerter Darstellung,
- Figur 3: einen Schnitt längs der Linie A-A in Figur 2,
- Figur 4: in Draufsicht eine Mehrfachhalterung für Nadelrollen als Rohlinge für die Herstellung des Kolbens nach Figur 1,
- Figur 5: die Mehrfachhalterung nach Figur 4 in Seitenansicht,
- Figur 6: die Einzelheit X in Figur 5 in vergrößerter Darstellung mit eingezeichnetem Verfahrweg eines Erodierdrahtes zur Herstellung von Nuten und Steuerkanten des Kolbens nach Figur 2,
- Figur 7: die Einzelheit X in Figur 5 in einer um 90° gegenüber der Lage nach Figur 6 verdrehten Stellung.

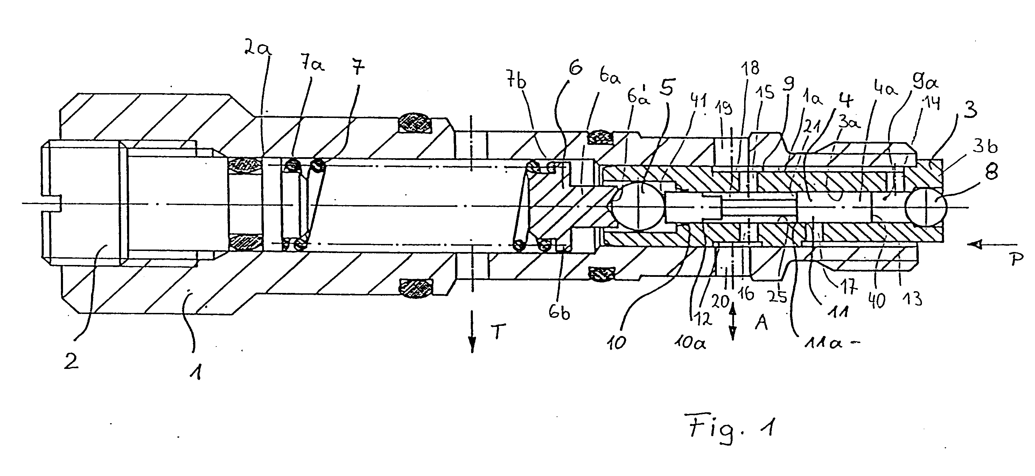

Das Kolbenschieberventil nach Figur 1 weist ein Gehäuse 1 auf, in dem eine Einstellschraube 2, eine Buchse 3, ein Kolben 4, eine Kugel 5, ein Federteller 6, eine Feder 7 und eine Verschlußkugel 8 angeordnet sind. Der Kolben 4 ist in einer Bohrung 3a der Buchse 3 verschiebbar angeordnet. Der Federteller 6 weist einen verjüngten Ansatz 6a mit einer stirnseitigen Vertiefung 6a' auf, in der sich die Kugel 5 abstützt. Die Feder 6 liegt mit einem Ende 7a an einem Ringbund 2a der Einstellschraube 2 und mit ihrem anderen Ende 7b an einem Flansch 6b des Federtellers 6 an. Das von der Einstellschraube 2 abgewandte Kolbenende 4a liegt mit Abstand von der Verschlußkugel 8, so daß zwischen der Kugel und dem Kolbenende ein Raum 9a für das Druckmedium, vorzugsweise Öl, gebildet ist. Die Einstellschraube 2 ist in das eine Ende des Gehäuses 1 geschraubt, über dessen anderes Ende die Buchse 3 ragt. Ihre Bohrung 3a ist am überstehenden Buchsenende durch die Verschlußkugel 8 geschlossen.

Das Gehäuse 1 hat einen Arbeitsanschluß A, 19, 20 und im Bereich der Feder 7 einen Tankanschluß T. Der Druckraum 9a zwischen dem Kolben 4 und der Verschlußkugel 8 steht über eine Druckrückführleitung 9 mit dem Arbeitsanschluß A, 19, 20 in Verbindung. Hierzu ist die Buchse 3 mit einer Querbohrung 14 versehen, die den Druckraum 9a mit der Druckrückführleitung 9 verbindet. Die Buchse 3 hat außerdem weitere Querbohrungen 15, 16 und eine Steuerbohrung 17. Die Querbohrungen 15, 16 verbinden die Druckrückführleitung 9 mit einem Druckraum 18 zwischen den Kolbenenden, während die Steuerbohrung 17 in einen Druckanschluß 13 des Kolbenschieberventils mündet.

Über die Steuerbohrung 17 kann das Druckmedium bei entsprechender Stellung des Kolbens 4 in den Druckraum 18 strömen.

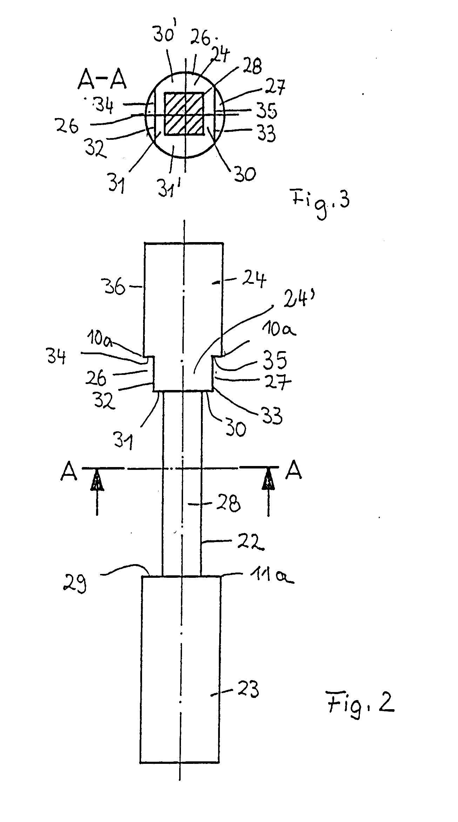

Wie die Figuren 2 bis 7 zeigen, wird der Kolben 4 aus einer Nadelrolle hergestellt. Zur Bildung des Druckraumes 18 im Ventil wird eine vorzugsweise umlaufende Nut am Kolben 4 durch Drahterodieren hergestellt. Der Kolben 4 hat sehr kleine Abmessungen; er ist vorzugsweise nur 13 mm lang und hat einen Durchmesser von 2 mm. Der Kolbendurchmesser kann aber auch im Bereich von beispielsweise nur 1 mm liegen.

Der Druckraum 18 ist nach außen durch die Bohrungswand 25 der Bohrung 3a der Buchse 3 und nach innen durch eine Umfangsnut 22 und zwei Nuten 26, 27 des Kolbens 4 begrenzt, die zwischen zwei Endabschnitten 23 und 24 (Figur 2, 3) des Kolbens 4 verlaufen. Der eine, in eingebautem Zustand des Kolbens benachbart zur Verschlußkugel 8 liegende Endabschnitt 23 ist länger als der andere Endabschnitt 24 und etwa gleich lang wie die Umfangsnut 22. Sie wird durch vier senkrecht zueinander liegende, durch Drahterodieren hergestellte Seiten des Kolbens gebildet, wie noch erläutert wird. Der im Bereich der Umfangsnut 22 verbleibende mittlere verjüngte Kolbenabschnitt 28 hat viereckigen, vorzugsweise quadratischen Querschnitt, wie Figur 3 zeigt. Zwischen dem verjüngten Abschnitt 28 und dem Kolbenendabschnitt 23 ist eine Ringschulter 29 gebildet, deren Rand die Steuerkante 11a bildet. Der verjüngte Abschnitt 28 geht am anderen Ende über eine weitere und zur Schulter 29 parallel verlaufende Ringschulter 30, 31, 30', 31' in einen die diametral einander gegenüberliegenden Nuten 26, 27 aufweisenden Teilabschnitt 24' über. Die Nuten 26, 27 erstrecken sich in Längsrichtung des Kolbens 4 und sind im Vergleich zur Nut 22 relativ kurz; ihre Länge ist etwa gleich einem Viertel der Länge des Endabschnittes 24 des Kolbens 4. Der ebene Boden 32, 33 der Nuten 26, 27 geht jeweils über eine radiale Schulterfläche 34, 35 in die Umfangsfläche 36 des Abschnittes 24 über (Figur 3). Die Nuten 26, 27 sind gleich ausgebildet und nur etwa halb so tief wie die Umfangsnut 22. Die Schulterflächen 34 und 35 bilden bei montiertem Kolben 4 (Figur 1) die Steuerkante 10a.

Wie Figur 3 zeigt, haben die Nuten 26, 27 jeweils segmentförmigen Querschnitt. Der Nutboden 32, 33 verläuft parallel zur jeweils benachbarten Seitenwand des Kolbenabschnittes 28. Die Nuten 26, 27 sind axial in Richtung auf den Endabschnitt 23 offen und in entgegengesetzter Richtung durch die Schulterflächen 34, 35 geschlossen.

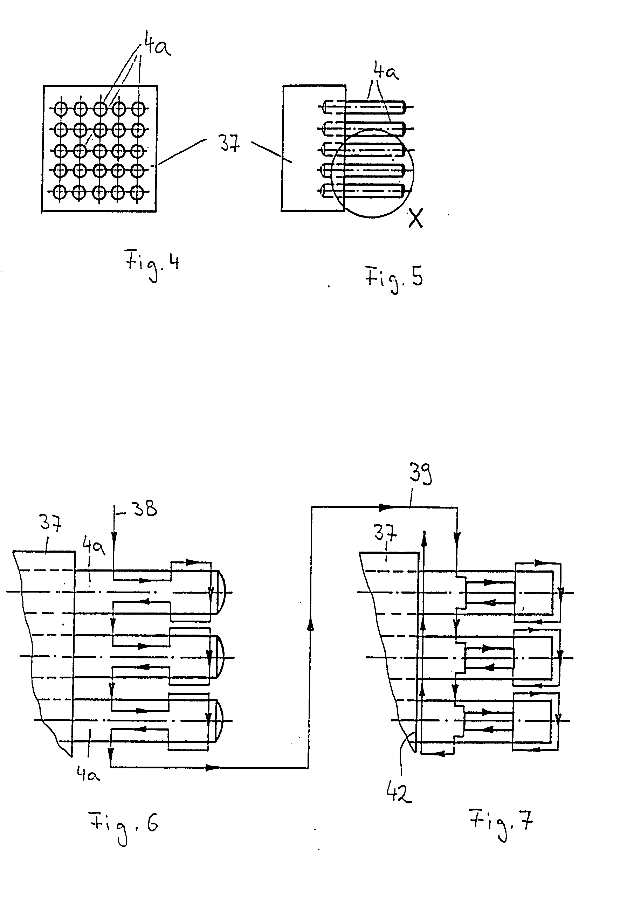

Der Steuerkolben 4 läßt sich einfach und kostengünstig als Pfennigartikel herstellen. Er kann vorteilhaft mit weiteren gleichen Kolben in einem Arbeitsgang in Serie hergestellt werden. Hierzu werden stabförmige Nadelrollen bzw. Lagernadeln 4a (Figuren 4 bis 7) in einer Mehrfachhaltevorrichtung 37 angeordnet. Sie ist kastenartig ausgebildet und weist zur Aufnahme der Nadelrollen 4a Stecköffnungen auf, in die die Nadelrollen gesteckt sind. Danach werden die in der Haltevorrichtung angeordneten Nadelrollen mit einem (nicht dargestellten) Erodierdraht bearbeitet, der vorzugsweise einen Drahtdurchmesser von etwa 2/10 mm hat. Hierbei werden die Nuten 22, 26 und 27 sowie die Steuerkanten 10a und 11a des Kolbens gebildet. Der Erodierdraht wird zur Bearbeitung auf einer in den Figuren 6 und 7 durch die Pfeile 38 und 39 gekennzeichneten Bahn längs der Nadelrollen 4a bewegt.

Zunächst wird, wie Figur 6 zeigt, die Umfangsnut 22 mit der Steuerkante 11a durch Verfahren des Drahtes längs der Bahn 38 gebildet, wobei alle in der Haltevorrichtung 37 angeordneten Nadelrollen 4a nacheinander in derselben Weise bearbeitet werden. Dann wird die Haltevorrichtung 37 mit den so bearbeiteten Nadelrollen 4a um 90° in die in Figur 7 dargestellte Lage gedreht. Nunmehr wird der Erodierdraht längs der vorbearbeiteten Nadelrollen 4a verfahren. Zur Bildung der Nuten 26, 27 und der Steuerkante 10a wird der Erodierdraht längs der Bahn 39 fortbewegt.

Zunächst wird der Erodierdraht axial in die Nadelrolle 4a bewegt und dabei ein Teil 30 bzw. 31 der Schulterfläche 30, 31, 30', 31' gebildet. Sobald die erforderliche radiale Tiefe erreicht ist, wird der Erodierdraht axial verfahren und dabei eine ebene Seitenwand des Kolbenabschnittes 28 (Fig. 3) bzw. der eine ebene Boden der Umfangsnut 22 hergestellt. Sobald die erforderliche axiale Länge der Umfangsnut 22 erreicht ist, wird der Erodierdraht wieder nach außen bewegt, wobei ein Teil der Schulterfläche 29 hergestellt wird. Außerhalb der Nadelrolle 4a wird der Erodierdraht bis zum benachbarten Ende der Nadelrolle bewegt. Sofern dieses Ende stirnseitig noch sauber bearbeitet werden muß, wird mit dem Erodierdraht, wie in Figur 6 dargestellt, dieses Ende senkrecht zur Kolbenachse abgetrennt. Anschließend wird der Erodierdraht außerhalb der Nadelrolle 4a wieder axial zurückbewegt, bis er sich in Höhe des gegenüberliegenden, bereits hergestellten Teils der Schulterfläche 29 befindet. Der Erodierdraht wird dann wiederum radial in die Nadelrolle 4a bewegt und dabei ein weiterer Teil der Schulterfläche 29 durch Erodieren hergestellt. Ist die erforderliche radiale Tiefe erreicht, wird der Erodierdraht wieder axial bewegt und dabei ein weiterer ebener Boden der Umfangsnut 22 hergestellt. Sobald die erforderliche axiale Länge der Umfangsnut 22 erreicht ist, wird der Erodierdraht wieder radial nach außen bewegt und dabei ein weiterer Teil 31 bzs. 30 der Schulterfläche 30, 31, 30', 31' durch Erodieren hergestellt.

Der Erodierdraht wird nunmehr radial in die benachbarte Nadelrolle 4a bewegt, die auf die gleiche Weise, wie zuvor beschrieben, durch Drahterodieren bearbeitet wird. Auf diese Weise werden nacheinander alle in der Haltevorrichtung 37 befindlichen Nadelrollen bearbeitet.

Sobald alle Nadelrollen 4a bearbeitet sind, wird die Haltevorrichtung 37 um 90° gedreht (Fig. 7). Der Erodierdraht wird zur Bildung der Schulterfläche 34 bzw. 35 radial in die teilweise bearbeitete Nadelrolle 4a bewegt. Sobald die gewünschte radiale Tiefe erreicht ist, wird der Erodierdraht axial in Richtung auf den Endabschnitt 23 bewegt. Dabei wird die eine segmentförmige Nut 26 bzw. 27 hergestellt. Erreicht der Erodierdraht die Hohe der zuvor schon hergestellten Schulterfläche 30, 31, 30', 31', wird der Erodierdraht radial noch weiter nach innen bewegt und dabei ein weiterer Teil 30' bzw. 31' der Schulterfläche 30, 31, 30', 31' hergestellt. Nach Erreichen der erforderlichen Tiefe wird der Erodierdraht axial in Richtung auf den Endabschnitt 23 bewegt und dabei ein weiterer ebener Boden der Umfangsnut 22 durch Erodieren hergestellt. Sobald dieser Boden die erforderliche axiale Länge hat, wird der Erodierdraht radial nach außen bewegt und hierbei ein weiterer Teil der Schulterfläche 29 des Endabschnittes 23 hergestellt.

Der Erodierdraht wird außerhalb des Endabschnittes 23 um ihn herumgeführt und auf der gegenüberliegenden Seite zur Bildung des restlichen Teiles der Schulterfläche 29 wieder radial in die Nadelrolle 4a bewegt. Hat der Erodierdraht die erforderliche radiale Tiefe erreicht, wird er vom Endabschnitt 23 ausgehend axial in Richtung auf das gegenüberliegende Ende der Nadelrolle 4a bewegt. Dabei wird wiederum ein ebener Boden der Umfangsnut 22 hergestellt. Sobald dieser Boden die erforderliche axiale Länge hat, wird der Erodierdraht zur Bildung des restlichen Teiles 30' bzw. 31' der Schulterfläche 30, 31, 30', 31' radial nach außen bewegt. Anschließend wird der Erodierdraht wieder axial bewegt und dabei die andere segmentförmige Nut 27 bzw. 26 hergestellt. Sobald sie die erforderliche axiale Länge hat, wird der Erodierdraht unter Bildung der Schulterfläche 35 bzw. 34 radial aus der Nadelrolle 4a herausbewegt.

Auf die beschriebene Weise werden, wie durch die Linie 39 in Figur 7 angedeutet ist, nacheinander die Nadelrollen 4a durch Drahterodieren bearbeitet.

Zum Abschluß werden die Nadelrollen 4a mit Abstand von der Oberseite 42 der Haltevorrichtung 37 durch den Erodierdraht rechtwinklig zu ihrer Achse abgetrennt.

Der Erodierdraht wird während des Erodiervorganges ständig von einer Vorratstrommel oder dgl. abgewickelt, so daß stets ein sauberer Drahtabschnitt für das Erodieren zur Verfügung steht.

Sowohl bei der ersten Bearbeitung gemäß Figur 6 als auch bei der Bearbeitung nach dem Verdrehen der Haltevorrichtung in die Lage nach Figur 7 werden die Nadelrollen 4a nacheinander bearbeitet, wobei der Draht auf den ununterbrochenen Bahnen 38 und 39 bewegt wird. Auf diese Weise lassen sich die Kolben bzw. ihre Nuten und Steuerkanten äußerst genau herstellen, so daß mit diesen Kolben ausgestattete Ventile infolge der hohen Bearbeitungsgenauigkeit der Kolben nur sehr geringe Leckverluste aufweisen. Dabei können die Kolben äußerst kostengünstig in Serie hergestellt werden. Die zur Bearbeitung bzw. Halterung der Nadelrollen 4a verwendete Mehrfachspannhaltevorrichtung 37 ist relativ einfach ausgebildet. Mit dieser Vorrichtung können die Stückkosten durch die gleichzeitige Bearbeitung der Nadelrollen gering gehalten werden. Es können auch alle Formen von Ölnuten und Feinsteuerkanten in engsten Toleranzen einfach hergestellt werden.

Die Aufnahmebohrung 3a der Buchse 3 für den Kolben 4 wird ebenfalls durch Drahterodieren hergestellt. Vorteilhaft ist hierbei, daß neben den sehr kleinen Fertigungstoleranzen auch die exakte Zylinderform der Bohrung erreicht werden kann. Zum anderen werden störende Grate, die durch eine mechanische Bearbeitung entstehen können, bei der Drahterodierung entfernt und nicht, wie bei einer mechanischen Bearbeitung, zum Beispiel durch Honen, weggedrückt. Bei der Erodierung der Aufnahmebohrung 3a wird zunächst die Bohrung vorgebohrt. Bei dem beschriebenen Kolbendurchmesser von 2 mm wird beispielsweise auf eine lichte Weite von 1,7 mm vorgebohrt. Anschließend wird der Erodierdraht in die vorbearbeitete Bohrung automatisch eingefahren und dort mittig angeordnet. Wegen der geringen Länge der Kolben und damit auch der Buchse können wenigstens zwei gleiche Buchsen in einem Arbeitsgang gemeinsam bearbeitet werden. Hierzu werden die Buchsen in einer (nicht dargestellten) Haltevorrichtung hintereinander angeordnet. Der zum Erodieren verwendete Erodierdraht hat wie bei der Bearbeitung der Nadelrollen einen sehr kleinen Durchmesser von etwa 2/10 mm. Er wird automatisch mittig in die Bohrung eingefädelt und fährt dann programmiert eine Kreisbahn ab. Hierbei werden zunächst vier Punkte angefahren. Die so ermittelten Werte werden dann gemittelt, worauf der Draht aus der Mitte eine Kreisbahn exakt definiert mit Schritten von beispielsweise 0,25 µm abfährt. Durch Drahterodieren wird eine absolute Zylinderform der Bohrung erreicht, so daß diese absolut gerade ist, also keine Aufweitungen an Steuerkanten oder zu Beginn der Bohrung aufweist. Bei der beschriebenen Drahterodierung ist der jeweilige Drahtabschnitt jeweils über die gesamte Länge der zu bearbeitenden Bohrungen im Einsatz, so daß eine sehr hohe Zylindrizität der Bohrung erreicht ist.

Die anhand von Figur 2 beschriebene umlaufende Nut 22 des Kolbens 4, deren Boden durch die vier ebenen Seitenflächen des Kolbenabschnittes 28 gebildet wird, kann beispielsweise auch dreieckigen Querschnitt haben. Es ist aber auch möglich, die Nut im Querschnitt nur zweikantig auszubilden; sie ist dann nicht mehr umlaufend ausgebildet. Dann muß in der Bohrungswandung eine entsprechende Nut vorgesehen sein.

Das in Figur 1 dargestellte Dreiwegedruckminderventil regelt im Arbeitsanschluß A, 19, 20 einen über die Feder 7 eingestellten Druck unabhängig vom Zulaufdruck ein. Befindet sich die durch den Druck im Raum 9a auf die freie Stirnfläche 40 des Kolbenendabschnittes 23 wirkende Kraft mit der Kraft der Feder 7, die über den Federteller 6 und die Kugel 5 auf die andere Stirnfläche 41 des Kolbenendabschnittes 24 wirkt, im Gleichgewicht, dann befinden sich die Steuerkanten 11, 11a und 10, 10a in der in Figur 1 dargestellten überdeckten, sogenannten geschlossenen Lage (Figur 1). In diesem Fall fließt kein Öl vom Druckanschluß 13 zum Arbeitsanschluß A, 19, 20 oder vom Arbeitsanschluß zum Tankanschluß T. Lediglich infolge Leckage, die durch das Kolbenlaufspiel entsteht, kann Öl nach außen fließen. Durch die beschriebene schriebene Ausbildung des Kolbens 4 und der Buchse 3 wird die Leckage, die eine Verlustleistung darstellt, auf ein Minimum reduziert. Sinkt der Druck am Anschluß A, 19, 20 ab, der über die Nut 9 im Raum 9a auf die Kolbenstirnfläche 40 wirkt, überwiegt die Kraft der Feder 7, wodurch über die Steuerkanten 11 und 11a die Verbindung vom Druckanschluß 13 zum Arbeitsanschluß A, 19, 20 geöffnet wird. Sie bleibt so lange offen, bis der Druck im Arbeitsanschluß A, 19, 20 so weit angestiegen ist, daß die Druckkraft die Federkraft überwinden kann und die Verbindung vom Druckanschluß 13 zum Arbeitsanschluß A, 19, 20 wieder geschlossen wird. Steigt dann der Druck am Anschluß A, 19, 20 über den eingestellten Wert an, bewegt sich der Kolben 4 gegen die Kraft der Feder 7 und öffnet über die Steuerkanten 10 und 10a die Verbindung vom Arbeitsanschluß zum Tankanschluß T so lange, bis die Federkraft überwiegt und dadurch der Kolben 4 in die Schließstellung gemäß Figur 1 verschoben wird.

## Patentansprüche

1. Kolbenventil mit einem Gehäuse (1), in dem ein Kolben (4) mit mindestens einer Ölnut (22) und Steuerkanten (10, 10a; 11, 11a) in einer Bohrung (3a) verstellbar geführt ist,
dadurch gekennzeichnet, daß die Ölnut (22) durch Drahterodieren hergestellt und umlaufend ausgebildet ist, und der Querschnitt des Kolbens im Ölnutbereich ein Mehrkantprofil aufweist.

2. Ventil nach Anspruch 1,
dadurch gekennzeichnet, daß der Kolben (4) mindestens eine weitere Ölnut (26, 27) aufweist, die mit einem ebenen Nutboden (32, 33) versehen ist.

3. Ventil nach einem der Ansprüche 1 bis 2,
dadurch gekennzeichnet, daß der Kolben (4) eine Länge von etwa 13 mm und einen Durchmesser von etwa 2 mm hat.

4. Ventil nach einem der Ansprüche 1 bis 3,
dadurch gekennzeichnet, daß der Kolben (4) in einer Bohrung (3a) einer Buchse (3) angeordnet ist, die im Gehäuse (1) untergebracht ist.

5. Verfahren zur Herstellung eines Kolbenventils nach einem der Ansprüche 1 bis 4, bei dem am Kolben Steuerkanten und mindestens eine Ölnut hergestellt werden,
dadurch gekennzeichnet, daß die Ölnut (22, 26, 27) des Kolbens (4) durch Drahterodieren hergestellt wird.

6. Verfahren nach Anspruch 5,
dadurch gekennzeichnet, daß die einen Längsseiten des mehrkantigen Nutgrundes der Ölnut (22) des Kolbens (4) und die einen Steuerkanten (11a) in einem ersten Arbeitsgang und die anderen Längskanten der Ölnut (22) und die anderen Steuerkanten (10a) in einem weiteren Arbeitsgang hergestellt werden.

7. Verfahren nach Anspruch 5 oder 6,
dadurch gekennzeichnet, daß der Kolben (4) in der einen und der anderen Bearbeitungslage jeweils eine um 90° versetzte Lage zueinander einnimmt.

8. Verfahren nach einem der Ansprüche 5 bis 7,
dadurch gekennzeichnet, daß der Kolben (4) aus einer Nadelrolle (4a) hergestellt wird.

9. Verfahren nach Anspruch 8,
dadurch gekennzeichnet, daß mehrere in einer Mehrfachhaltevorrichtung (37) angeordnete Nadelrollen (4a) gemeinsam durch Drahterodieren hergestellt werden.

10. Verfahren nach einem der Ansprüche 5 bis 9,
dadurch gekennzeichnet, daß die Bohrung (3a) der Buchse (3) durch Drahterodieren hergestellt wird.

11. Verfahren nach einem der Ansprüche 5 bis 10,
dadurch gekennzeichnet, daß bei der Bearbeitung der Bohrung (3a) die Buchse (3) mit mindestens einer weiteren gleichen Buchse gemeinsam in einem Arbeitsgang mit dem Draht erodiert wird.

12. Verfahren nach einem der Ansprüche 5 bis 11,
dadurch gekennzeichnet, daß die Kreisform der Bohrung (3a) der Buchse (3) kurvengesteuert hergestellt wird.

13. Verfahren nach einem der Ansprüche 5 bis 12,
dadurch gekennzeichnet, daß der Draht zum Erodieren des Kolbens (4) und/oder der Buchse (3) einen Durchmesser 2/10 mm aufweist.

## Claims

1. A piston valve with a casing (1) in which a piston (4) with at least one oil groove (22) and control edges (10, 10a; 11, 11a) is adjustably guided in a bore (3a), **characterised in that** the oil groove (22) is produced by wire cutting spark erosion and is formed to be circumferential, and the piston has a polygonal cross-sectional profile in the region of the oil groove.

2. A valve in accordance with claim 1, **characterised in that** the piston (4) has at least one further oil groove (26, 27) which is provided with a planar groove base (32, 33).

3. A valve in accordance with one of claims 1 or 2, **characterised in that** the piston (4) has a length of approximately 13 mm and a diameter of approximately 2 mm.

4. A valve in accordance with one of claims 1 to 3, **characterised in that** the piston (4) is arranged in a bore (3a) in a sleeve (3) which is positioned in the casing (1).

5. A process for manufacturing a piston valve in accordance with one of claims 1 to 4, in which control edges and at least one oil groove are produced on the piston, **characterised in that** the oil groove (22, 26, 27) in the piston (4) is produced by wire cutting spark erosion.

6. A process in accordance with claim 5, **characterised in that** the first longitudinal sides of the polygonal base of the oil groove (22) in the piston (4), and the first control edges (11a), are produced in a first working step, and the other longitudinal edges of the oil groove (22) and the other control edges (10a) are produced in a further working step.

7. A process in accordance with claim 5 or 6, **characterised in that** one machining position and the other machining position which the piston (4) occupies are offset by 90° in relation to one another.

8. A process in accordance with one of claims 5 to 7, **characterised in that** the piston (4) is produced from a needle roller (4a).

9. A process in accordance with claim 8, **characterised in that** a plurality of needle rollers (4a) arranged in a multiple retaining device (37) are produced together by wire cutting spark erosion.

10. A process in accordance with one of claims 5 to 9, **characterised in that** the bore (3a) in the sleeve (3) is produced by wire cutting spark erosion.

11. A process in accordance with one of claims 5 to 10, **characterised in that** upon machining the bore (3a), the sleeve (3) and at least one further identical sleeve are produced together by wire cutting spark erosion in one working step.

12. A process in accordance with one of claims 5 to 11, **characterised in that** the circular shape of the bore (3a) in the sleeve (3) is produced in a curve-controlled manner.

13. A process in accordance with one of claims 5 to 12, **characterised in that** the wire for spark erosion of the piston (4) and/or the sleeve (3) has a diameter of 2/10 mm.

## Revendications

1. Valve à piston avec un boîtier (1), dans lequel un piston (4) avec au moins une gorge à huile (22) et des arêtes de commande (10, 10a ; 11, 11a) est guidé dans un perçage (3a) de façon mobile, caractérisée en ce que la gorge à huile (22) est ménagée par érosion par fil et est réalisée en périphérie, et en ce que la section transversale du piston dans la région de la gorge à huile présente un profil à arêtes multiples.

2. Valve selon la revendication 1, caractérisée en ce que le piston (4) présente au moins une autre gorge à huile (26, 27), qui est pourvue d'un fond de gorge (32, 33) plat.

3. Valve selon l'une des revendications 1 à 2, caractérisée en ce que le piston (4) a une longueur d'environ 13 mm et un diamètre d'environ 2 mm.

4. Valve selon l'une des revendications 1 à 3, caractérisée en ce que le piston (4) est agencé dans un perçage (3a) d'une douille (3), qui est logée dans le boîtier (1).

5. Procédé pour la réalisation d'une valve à piston selon l'une des revendications 1 à 4, dans laquelle des arêtes de commande et au moins une gorge à huile sont réalisées sur le piston, caractérisé en ce que la gorge à huile (22, 26, 27) du piston (4) est ménagée par érosion par fil.

6. Procédé selon la revendication 5, caractérisé en ce que l'un des longs côtés du fond de gorge à arêtes multiples de la gorge à huile (22) du piston (4) et l'une des arêtes de commande (11a) sont ménagés lors d'une première opération d'usinage et en ce que les autres arêtes longues de la gorge à huile (22) et les autres arêtes de commande (10a) sont ménagées lors d'une autre opération d'usinage.

7. Procédé selon la revendication 5 ou 6, caractérisé en ce que le piston (4) occupe dans l'une et l'autre des positions d'usinage respectivement une position décalée de 90° l'une par rapport à l'autre.

8. Procédé selon l'une des revendications 5 à 7, caractérisé en ce que le piston (4) est réalisé à partir d'un rouleau en aiguille (4a).

9. Procédé selon la revendication 8, caractérisé en ce que plusieurs rouleaux en aiguille (4a) agencés dans un dispositif de maintien multiple (37) sont réalisés conjointement par érosion par fil.

10. Procédé selon l'une des revendications 5 à 9, caractérisé en ce que le perçage (3a) de la douille (3) est réalisé par érosion par fil.

11. Procédé selon l'une des revendications 5 à 10, caractérisé en ce que lors de l'usinage du perçage (3a), la douille (3) est érodée conjointement avec au moins une autre même douille dans une opération d'usinage avec le fil.

12. Procédé selon l'une des revendications 5 à 11, caractérisé en ce que la forme cylindrique du perçage (3a) de la douille (3) est réalisée au moyen d'une commande à courbe.

13. Procédé selon l'une des revendications 5 à 12, caractérisé en ce que le fil pour l'érosion du piston (4) et/ou de la douille (3) présente un diamètre de 2/10 mm.
